# EUROPEAN PATENT SPECIFICATION

(11) **EP 1 681 500 B1**
(45) Date of publication and mention of the grant of the patent: **09.04.2008**
(21) Application number: 05292042.8
(22) Date of filing: 30.09.2005
(51) Int. Cl.: F16K 17/04

(54) **Non-return valve**
Rückschlagventil
Soupape de non retour

(30) Priority: 18.01.2005 JP 2005009793
(43) Date of publication of application: 19.07.2006
(73) Proprietor: Fujikoki Corporation, Tokyo (JP)
(72) Inventor: Narukawa, Bunta c/o Fujikoki Corporation, Tokyo (JP); Furuta, Takuji c/o Fujikoki Corporation, Tokyo (JP)
(74) Representative: Intes, Didier Gérard André

(56) References cited:
- EP-A- 1 457 747
- DE-A1- 4 435 493
- US-A- 5 297 579
- US-A- 6 029 694

## Description

### BACKGROUND OF THE INVENTION

### Field of the Invention

The present invention relates to a non-return valve for a refrigerating cycle.

### Description of the Conventional Art

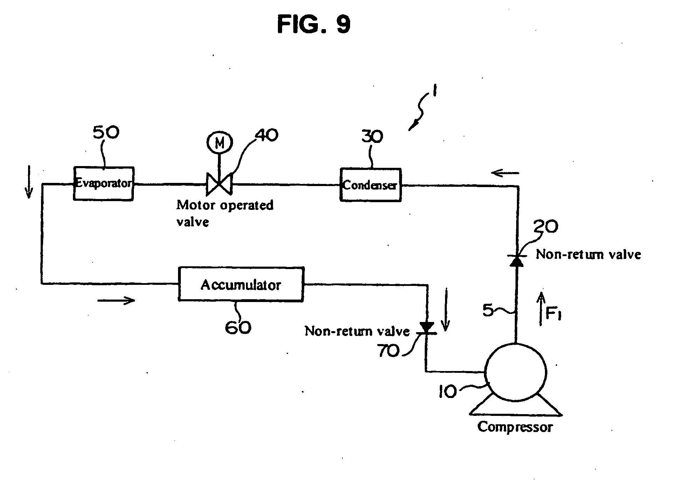

For example, Figure 9 is a view illustrating a basic constitution of the refrigerating cycle, such as a refrigerator, an air conditioning equipment or the like.

Code 1 is the whole of a refrigerant cycle. The refrigerant cycle 1 has a compressor 10 for compressing a refrigerant, and the refrigerant discharged from the compressor 10 passes a first non-return valve 20 through a pipe 5 to be fed to a condenser 30. A high-pressure refrigerant condensed by the condenser 30 is fed to a motor operated valve 40; and is adiabatically expanded while a flowing amount is controlled according to valve switching of the motor operated valve 40. The refrigerant cooled by the adiabatic expansion is fed to an evaporator 50 to carry out heat exchange.

The refrigerant discharged from the evaporator 50 is accumulated in an accumulator, and is returned to the compressor 10 through a second non-return valve 70. refrigerating cycle is disclosed in Japanese Patent Application Laid Open No. 2004-11909.

Other non- return valves of the prior art are disclosed in DE 44 35 493 and EP 1 457 747.

### Summary of the Invention

As for the non-return valve used in the refrigerant cycle, vibration and noise of the valve are easily generated by the pulsation of the compressor 10, or vibration and noise are easily caused by the continuous valve switching when the difference in pressure between the front and back of the valve is low.

As for the non-return valve indicated in the above patent document, the vibration and the noise of the valve are prevented by providing a coil spring in the horizontal direction with respect to the flowing direction of the refrigerant passed through the valve.

However, a vibration proof function is not provided in the vertical direction with respect to the flowing direction of the refrigerant, and thus the vibration and the noise cannot be prevented.

The primary objective of the present invention is to provide a non-return valve capable of solving the above-mentioned problems.

The non-return valve of the present invention is defined in claim 1.

It comprises a cylindrical valve seat member having a valve seat fixed in a pipe, a spherical valve element contacted with the valve seat, a rod-shaped valve supporting member integrally connected with the valve element, a guide member of the valve supporting member, where the guide member is fixed in the pipe and slidably guides the valve supporting member, the coil spring put into the guide member and energizing the valve supporting member toward the valve seat, and the vibration proof spring elastically supporting the valve supporting member in the vertical direction with respect to an axial line of the valve supporting member. Further, a flowing passage of a refrigerant is provided at an outer periphery part of the guide member. Furthermore, the vibration proof spring supports an outer periphery part of the valve supporting member by three arms formed by bending inward three parts of a plate made of an elastic material in a cylindrical shape.

When the non-return valve of the present invention has the above constitution, it is possible to give vibration proof property in the horizontal direction with respect to the flowing direction of the refrigerant to a valve rod integrated with the valve element by the coil spring. Further, it is also possible to improve vibration proof property by providing the vibration proof spring in the vertical direction with respect to the flowing direction of the refrigerant.

### BRIEF EXPLANATION OF DRAWINGS

Figure 1 is a view illustrating a mounting structure of a non-return valve of the present invention.
Figure 2 is a view illustrating a whole structure of a non-return valve of the present invention.
Figure 3 is a view illustrating a whole structure of a non-return valve of the present invention.
Figures 4(a) to 4(d) are views illustrating a constituent member of a non-return valve of the present invention.
Figure 5 is a view illustrating a constituent member of a non-return valve of the present invention.
Figures 6(a) to 6 (d) are views illustrating a constituent member of a non-return valve of the present invention.
Figures 7 (a) to 7(d) are views illustrating a constituent member of a non-return valve of the present invention.
Figure 8 is a view illustrating an assembled state of members.
Figure 9 is a view illustrating a providing place of a non-return valve in a refrigerant cycle.

### DETAILED DESCRIPTION OF PREFERRED EMBODIMENT

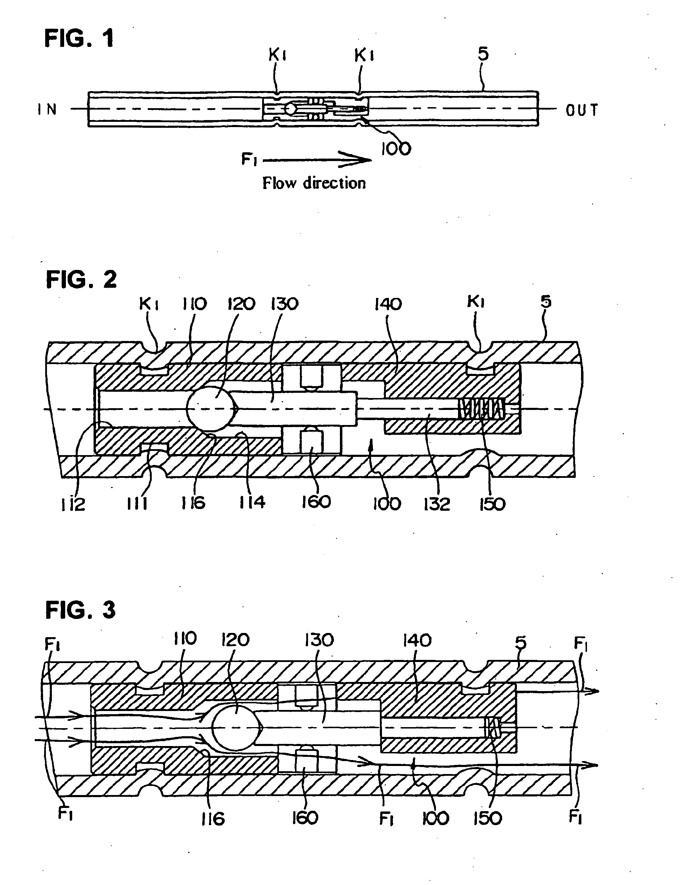

Figure 1 is a view illustrating a mounting structure of a non-return valve of the present invention, and Figure 2 is a view illustrating a constitution of a non-return valve of the present invention.

A non-return valve 100 is put into a pipe 5 made with a copper pipe or the like, and fixed in the pipe 5 with a caulking part K₁. An arrow F₁ illustrates the flowing direction of the refrigerant.

The non-return valve 100 comprises a valve seat member 110, a valve element 120, a valve supporting member 130 connected with the valve element 120, a guide member 140 for guiding the valve supporting member 130, a coil spring 150 for energizing the valve supporting member 130, and a vibration proof spring 160 for preventing the vibration of the valve supporting member 130.

The refrigerant is fed-in from an inlet 112 of the valve seat member 110. The valve seat member 110 has a valve seat 116, and is contacted with a spherical valve element 120. Figure 2 illustrates a valve closing state.

Figure 3 illustrates a valve opening state where the valve element 120 is separated from the valve seat 116 when the pressure of the refrigerant to be fed in overcomes spring forces of the coil spring 150 and the vibration proof spring 160. The refrigerant flows as illustrated with the arrow F₁.

The flowing F₁ of the refrigerant becomes the cause of the noise, when the pressure fluctuation is generated by the pulsation of the compressor or the like, and the vibrations of the valve element 120 and the valve supporting member 130 which are integrated is thereby generated.

Therefore, in the non-return valve of the present invention, the coil spring 150, which energizes the valve element 120 and the valve supporting member 130 in the horizontal direction with respect to the flowing direction of the refrigerant, and the vibration proof spring 160 which elastically supports the valve supporting member 130 in the vertical direction with respect to the flowing direction of the refrigerant, are provided to thereby prevent the vibration.

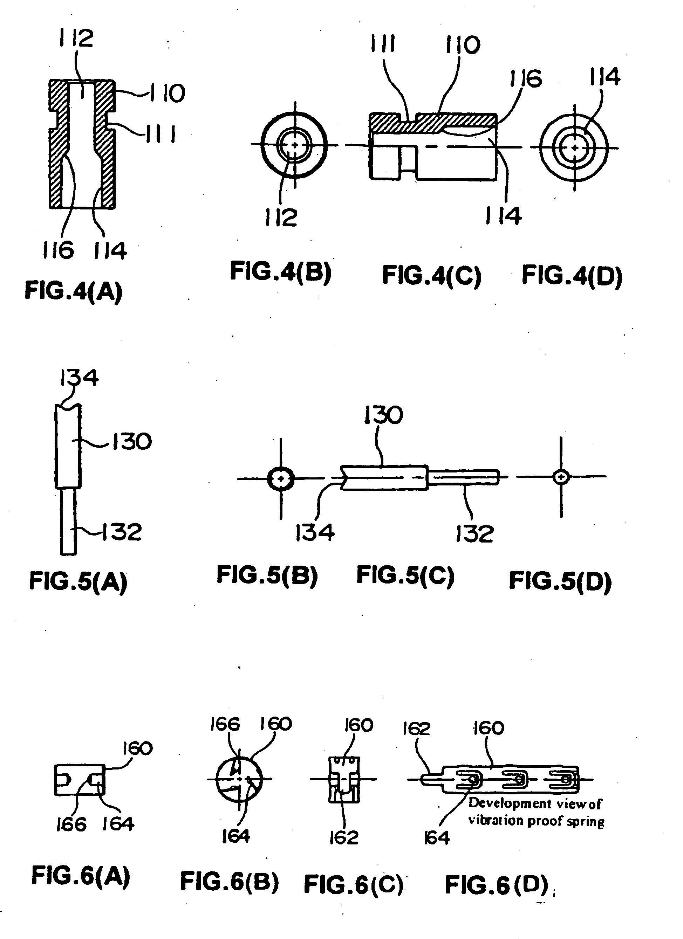

Figures 4(a) to 8 illustrate main members of the non-return valve of the present invention.

Figures 4(a) to 4(d) illustrate the valve seat member 110 concretely. The valve seat member 110 is made of brass or the like, and has an inlet 112 and an outlet 114 of the refrigerant. An annular groove 111 is provided at an outer periphery part of the cylindrical valve seat member 110 in which the valve seat 116 is formed between the inlet 112 and the outlet 114. The annular groove 111 is for accepting the caulking part K₁ and positioning it. Further, in between the pipe 5 and the valve seat member 110 can be kept airtight by the caulking part K₁.

Figure 5 illustrates the valve supporting member 130 concretely. The valve supporting member 130 is a rod-shaped member made of stainless steel or the like, and has a recessed part 134 for accepting the spherical valve element 120. The valve element 120 is fixed at the valve supporting member 130 by means of welding or the like. Further, the valve supporting member 130 has a small diameter part 132, which is slidably put into the guide member 140.

Figures 6 (a) to 6 (d) illustrate the vibration proof spring 160 concretely.

As for the vibration proof spring 160, a plate-shaped stainless steel material or the like in which slits are made is prepared, as illustrated in a development view in Fig.6(d), and material is rounded into a cylindrical shape, and three arm parts 164 are bent inward.

The arm parts 164 have a spring function by the elasticity thereof, and have projection parts 166 formed at a top end thereof.

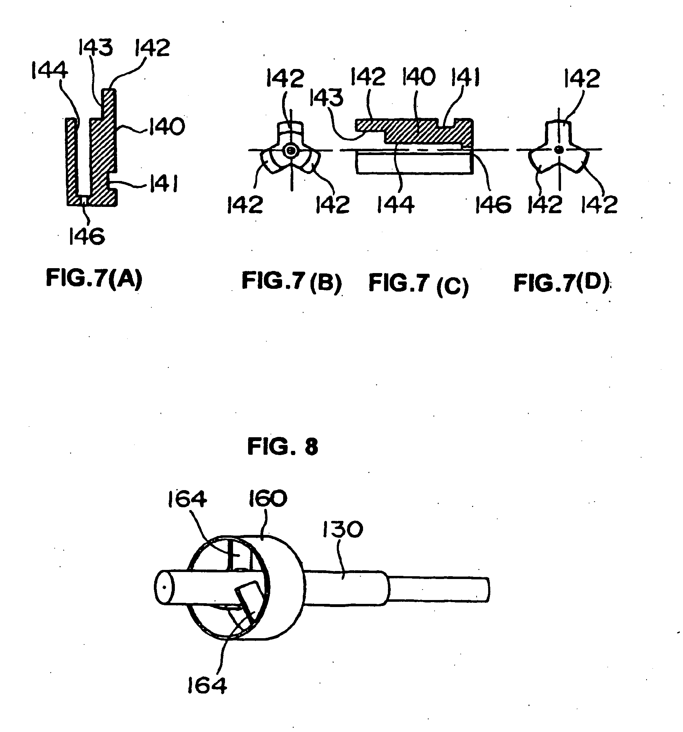

Figure 8 illustrates the assembled state of the valve supporting member 130 and the vibration proof spring 160. The three arm parts 164 of the vibration proof spring 160 elastically support the valve supporting member 130.

Figures 7(a) to 7(d)illustrate the guide member 140 of the valve supporting member concretely.

The guide member 140 is made of brass or the like, and has three leg parts 142. A space between each leg part 142 forms the passage of the refrigerant. An annular groove 141 is provided at an outer periphery part, and is positioned by the caulking part K₁ of the pipe.

The vibration proof spring 160 is held between a top end part of the leg part 142 and the valve seat member 110.

An inner periphery part of the leg part 142 has a large diameter part 143 and a small diameter hole 144 following the part 143. A through hole 146 is provided at a bottom part of the small diameter hole 144.

The small diameter part 132 of the valve supporting member 130 is slidably put into the small diameter hole 144 via the coil spring 150.

As mentioned above, the non-return valve of the present invention comprises the coil spring and the vibration proof member, where the coil spring energizes the valve supporting member integrated with the spherical valve element toward the valve seat and the vibration proof member elastically supports the valve supporting member on the surface being vertical to the axis line.

Then, it is possible to realize the vibration proofing in the horizontal direction with respect to the flowing of the refrigerant flowing around the valve element and the valve supporting member, and the vibration proofing in the vertical direction with respect to the flowing of the refrigerant.

Furthermore, there are few constituent parts for the non-return valve, and the structure of the valve is simple. Thus, the non-return valve can be manufactured easily, and the cost can be reduced.

## Claims

1. A non-return valve (100) for a refrigerant disposed in a pipe (5) of a refrigerating cycle, comprising:
a cylindrical valve seat member (110) fixed in said pipe (5) and provided with an inner refrigerant passage extending longitudinally, said inner refrigerant passage being provided on its intermediate part with a valve seat (116),
a spherical valve element (120) disposed in said inner refrigerant passage to be engaged with and disengaged from said valve seat (116),
a rod-shaped valve supporting member (130) having an end secured to said valve element (120),
a guide member (140) fixed in said pipe (5), provided on its outer periphery with an outer refrigerant passage extending longitudinally, and provided with a hole for slidably receiving the other end of said valve supporting member (130),
a coil spring (150) disposed in an inner part of said receiving hole to energize said valve supporting member (130) toward said valve seat (116), and
a vibration proof spring (160) fixed in said pipe (5) for elastically supporting an intermediate part of said valve supporting member (130) in a vertical direction with respect to a longitudinal direction.

2. The non-return valve as claimed in claim 1, wherein said vibration proof spring (160) supports the outer periphery of said intermediate part of the valve supporting member (130) by three arms (164) formed by bending inward three parts of a cylindrical plate made of an elastic material.

## Patentansprüche

1. Rückschlagventil (100) für ein Kühlmittel, das in einer Leitung (5) eines Kühlkreislauf angeordnet ist,
mit einem zylindrischen Ventilsitzglied (110), das in der Leitung (5) befestigt ist und mit einer inneren Kühlmittelpassage versehen ist, die sich in Längsrichtung erstreckt, wobei die innere Kühlmittelpassage in ihrem mittleren Teil mit einem Ventilsitz (116) versehen ist,
mit einem kugelförmigen Ventilelement (120), das in der inneren Kühlmittelpassage angeordnet ist, um an dem Ventilsitz (116) anzuliegen oder nicht anzuliegen,
mit einem stangenförmigen Ventilstützglied (130), dessen eines Ende an dem Ventilelement (120) befestigt ist,
mit einem Führungsglied (140), das in der Leitung (5) befestigt ist, an seinem äußeren Umfang mit einer äußeren Kühlmittelpassage versehen ist, die sich in Längsrichtung erstreckt, und mit einer Bohrung zur gleitenden Aufnahme des anderen Endes des Ventilstützgliedes (130) versehen ist,
mit einer Schraubenfeder (150), die in einem inneren Teil der aufzunehmenden Bohrung angeordnet ist, um das Ventilstützglied (130) in Richtung auf den Ventilsitz (116) vorzuspannen, und
mit einer vibrationssicheren Feder (160), die in der Leitung (5) befestigt ist zum elastischen Stützen eines mittleren Teils des Ventilstützgliedes (130) rechtwinklig zur Längsrichtung.

2. Rückschlagventil nach Anspruch 1, **dadurch gekennzeichnet, dass** die vibrationssichere Feder (160) den äußeren Umfang des mittleren Teils des Ventilstützgliedes (130) durch drei Arme (164) stützt, die durch Nachinnenbiegen von drei Teilen einer zylindrischen Platte aus einem elastischen Material geformt sind.

## Revendications

1. Clapet anti-retour (100) pour un réfrigérant disposé dans un tuyau (5) d'un cycle de réfrigération, comportant :
un élément de siège de clapet cylindrique (110) fixé dans ledit tuyau (5) et pourvu d'un passage de réfrigérant interne s'étendant longitudinalement, ledit passage de réfrigérant interne étant pourvu sur sa partie intermédiaire d'un siège de clapet (116),
un élément de clapet sphérique (120) disposé dans ledit passage de réfrigérant interne afin d'être engagé avec et désengagé dudit siège de clapet (116),
un élément de support de clapet en forme de tige (130) ayant une extrémité fixée sur ledit élément de clapet (120),
un élément de guidage (140) fixé dans ledit tuyau (5), pourvu sur sa périphérie extérieure d'un passage de réfrigérant externe s'étendant longitudinalement, et pourvu d'un trou destiné à recevoir de façon coulissante l'autre extrémité dudit élément de support de clapet (130),
un ressort hélicoïdal (150) disposé dans une partie intérieure dudit trou de réception afin d'activer ledit élément de support de clapet (130) vers ledit siège de clapet (116), et
un ressort anti-vibrations (160) fixé dans ledit tuyau (5) afin de supporter élastiquement une partie intermédiaire dudit élément de support de clapet (130) dans une direction verticale par rapport à une direction longitudinale.

2. Clapet anti-retour selon la revendication 1, dans lequel ledit ressort anti-vibrations (160) supporte la périphérie extérieure de ladite partie intermédiaire de l'élément de support de clapet (130) grâce à trois bras (164) formés en pliant vers l'intérieur trois parties d'une plaque cylindrique fabriquée dans une matière élastique.
